# EUROPEAN PATENT APPLICATION

(11) **EP 1 696 343 A1**
(43) Date of publication of application: **30.08.2006**
(21) Application number: 05253898.0
(22) Date of filing: 23.06.2005
(51) Int. Cl.: G06F 17/30, H04L 12/24

(54) **Web-based management system and method with centralized management console**

(30) Priority: 28.02.2005 JP 2005054330
(71) Applicant: FUJITSU LIMITED, Kawasaki-shi, Kanagawa 211-8588 (JP)
(72) Inventor: Yoshimura, Katsuyoshi, Fujitsu Limited, Kawasaki-shi Kanagawa 211-8588 (JP); Kaseda, Tsuyoshi, Fujitsu Terminal Systems Limited, Maebashi-shi Gunma 371-0855 (JP); Satou, Hiroko, Fujitsu Limited, Kawasaki-shi Kanagawa 211-8588 (JP); Iwamoto, Yuuki, Fujitsu Terminal Systems Limited, Maebashi-shi Gunma 371-0855 (JP)
(74) Representative: Hitching, Peter Matthew

(57) **Abstract**

In providing an information processing device management method contrived to improve operability by managing respective information processing devices via a network while eliminating any constraint in place for handling the management, a management device (3) receives a request from an administrator terminal (4) via the network, notifies the information processing device (2) of a process responding to the request, acquires management data as a result of the process from the information processing device and transmits the management data to a requester administrator terminal (5), and the information processing device executes the process which the management device notifies of, generates the management data in a predetermined format on the basis of the result of the process, and transmits the management data in the predetermined format to the management device.

## Description

The invention relates to a technology of managing information processing devices such as Web servers, etc. via a network.

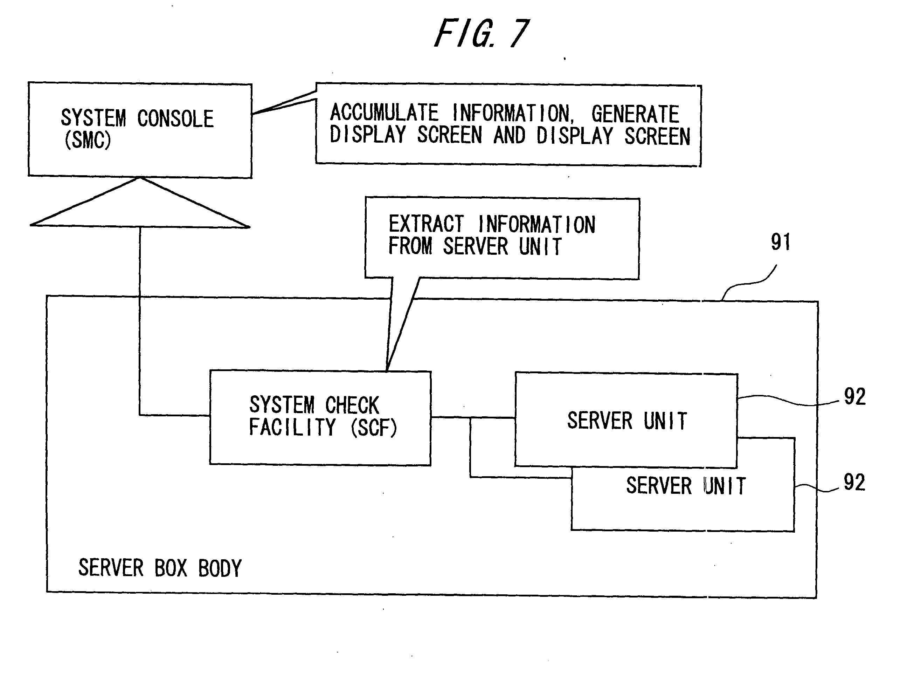

FIG. 7 is a schematic view of a previously considered server system. In this server system, a rack 91 contains a plurality of server units 92, a system monitoring mechanism (System Check Facility, which will hereinafter be abbreviated to SCF) for monitoring (checking) operating statuses of the server units 92, and a system console (which will hereinafter be abbreviated to SMC) for displaying the operating statuses, and the like.

The respective server units 92 may also be constructed of system boards (that will hereinafter be each abbreviated to SB) partitioned independently of each other.

The SCF extracts pieces of information of the plurality of server units within the rack 91, and sends the information to the SMC. The SMC accumulates the received data, generates a display screen based on the accumulated data, and displays the screen.

Further, the prior arts related to the invention of the present application are technologies disclosed in, for example, Patent documents 1 and 2 given as below.
[Patent document 1] Japanese Patent Application Laid-Open Publication No.2002-7463
[Patent document 2] Japanese Patent Application Laid-Open Publication No.11-306066

The system described above needs to connect the SMC in every rack 91 in order to manage the respective server units within the rack 91, resulting in an increase in costs for the entire system.

Further, when a person in charge manages the server units, this person in charge is required to go to a place where the SMC is installed. Consequently this lacks promptness necessary for the system management and causes a delay to take a measure for occurrence of a fault. Moreover, the person in charge must be allocated so that the person can go to the place where the SMC is installed and can do the management, and this brings about a rise in costs for the management.

Such being the case, it is desirable to provide a technology contrived to improve operability by managing respective information processing devices via a network while eliminating any constraint in place for handling the management.

The invention adopts the following configurations.

Namely, an information processing system of one embodiment of an aspect of the invention is configured by a plurality of information processing devices and a management device for the information processing devices,
the management device comprising:
a request receiving module receiving a request from an administrator terminal via a network;
a process notifying module notifying the information processing device of a process responding to the request; and
a distribution module acquiring management data as a result of the process from the information processing device and transmitting the management data to the requester administrator terminal, and
the information processing device comprising:
   a request processing module executing a process which the management device notifies of;
   a data generation module generating the management data in a predetermined format on the basis of the result of the process; and
   a processing result transmission module transmitting the management data in the predetermined format to the management device.

With this configuration, the system management of the single or the plurality of information processing devices can be actualized by accessing the management device from the administrator terminal via the network.

Further, an information processing device management method according to one embodiment of another aspect of the invention is conducted by a plurality of information processing devices and by a management device for the information processing devices,
the management device executing:
a step of receiving a request from an administrator terminal via a network;
a step of notifying the information processing device of a process responding to the request; and
a step of acquiring management data as a result of the process from the information processing device and transmitting the management data to the requester administrator terminal, and
the information processing device executing:
   a step of executing a process which the management device notifies of;
   a step of generating the management data in a predetermined format on the basis of the result of the process; and
   a step of transmitting the management data in the predetermined format to the management device.

Moreover, a management device of one embodiment of another aspect of the invention, for providing an administrator terminal with management data of a plurality of information processing devices, comprises:
a request receiving module receiving a request from an administrator terminal via a network;
a process notifying module notifying the information processing device of a process responding to the request; and
a distribution module acquiring management data as a result of the process from the information processing device and transmitting the management data to the requester administrator terminal.

The process notifying module may notify the information processing device of the process through a distribution function implemented CGI (Common Gateway Interface) started up in response to a request from the administrator terminal.

The management device may further comprise an authentication module making authentication based on administrator identifying information inputted from the administrator terminal, and
the process notifying module may notify the information processing device of the request given from the administrator terminal authenticated by the authentication module.

According to embodiments of the invention, it is possible to provide the technology contrived to improve the operability by managing the respective information processing devices via the network while eliminating any constraint in place for handling the management.

The invention will now be described by way of example, with reference to the accompanying drawings, in which:
FIG.1 is a schematic view of a server system of an embodiment of the invention;
FIG.2 is a view of architecture of the server system of an embodiment of the invention;
FIG.3 is a functional block diagram of the server system of an embodiment of the invention;
FIG. 4 is a processing sequence diagram according to an embodiment of the invention;
FIG.5 is a flowchart of a management method according to an embodiment of the invention.
FIG.6 is an explanatory diagram of how an HTML content is generated according to an embodiment of the invention; and
FIG. 7 is a schematic view of a previously considered server system.

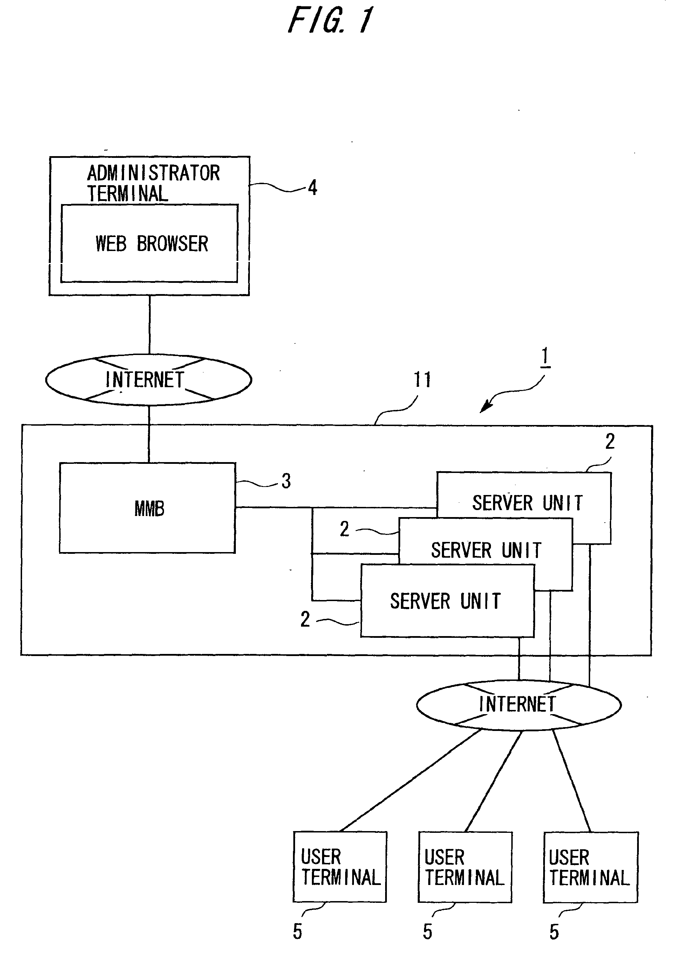

FIG. 1 is a schematic view of a server system (information processing system) 1 in the embodiment. As shown in FIG. 1, the server system 1 has a rack 11 containing a plurality of server units (information processing devices) 2 and a management board (MMB corresponding to a management device) 3, whereby the server system 1 provides management data of the server units 2 in response to a request given from an administrator terminal 4.

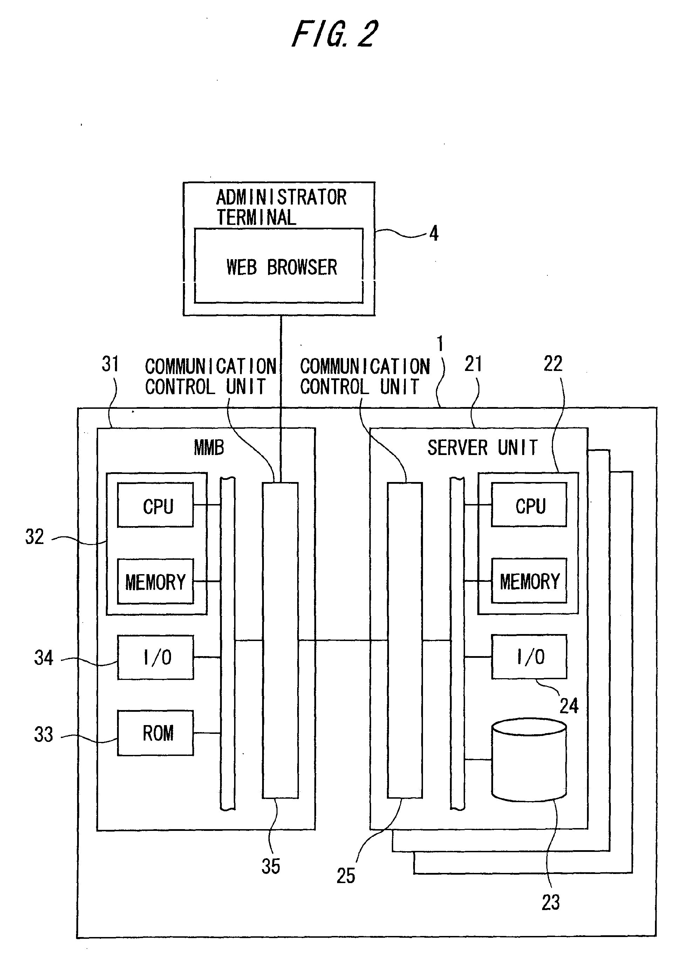

The MMB 3 is, as shown in FIG. 2, a general type of computer having a housing 31 that contains an arithmetic processing unit 32 constructed of a CPU (Central Processing Unit), a main memory, etc., a storage unit (ROM) 33 stored with data and software for arithmetic processing, an I/O port 34, a communication control unit 35, etc..

The communication control unit 35 controls communications with external computers via a network such as the Internet, etc. and with the computers (the server units 2) within the housing 31.

The storage unit 33 is stored with an operating system (OS) and application software (a management program). Further, the storage unit 33 is stored with authentication information in which an administrator ID (identifying information), a password and authority information are associated with each other. Note that the authority information is information representing, for instance, a management data request-enabled server unit and a type of a request-enabled process.

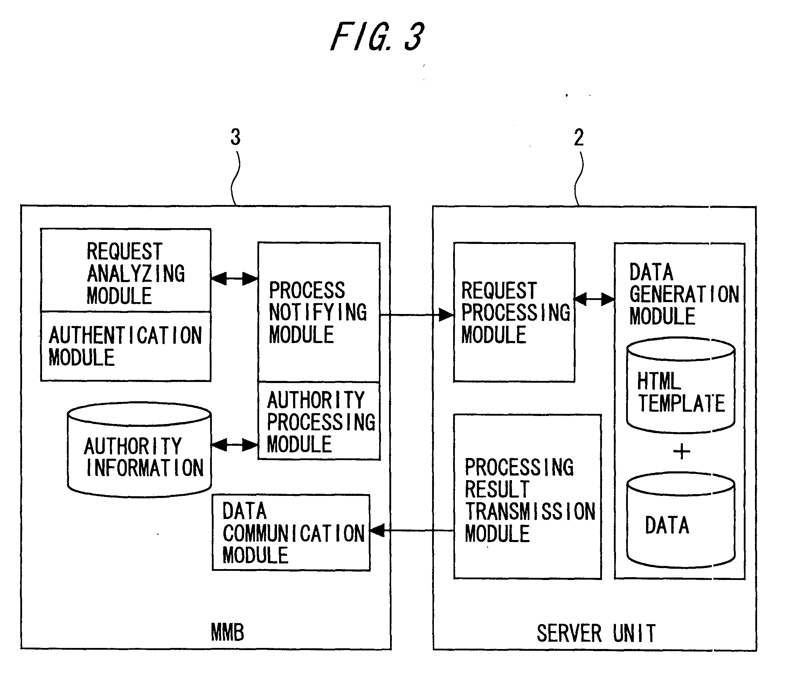

The arithmetic processing unit 32 properly reads the OS and the application software from the storage unit 33 and executes the OS and the application software, and effects arithmetic processing upon pieces of information inputted from the I/O port 34 and from the communication control unit 35 and the information read from the storage unit 33, thereby functioning, as shown in FIG. 3, a request analyzing module (request receivingmodule), a process notifyingmodule, a data send-back module (distribution module), an authentication module and an authority-processing module.

The request analyzing module receives a request from Web browser of the administrator terminal 4 via the network.

The process notifying module starts up CGI (Common Gateway Interface) corresponding to the received request, thereby notifying each server unit 2 of a process corresponding to the request.

The distribution module, as a result of the process, acquires an HTML-formatted management page generated by the server unit 2 and sends the management page to the requester administrator terminal 4.

The authentication module compares authentication information (e.g., an ID and a password) received from the administrator terminal with authentication information on the storage unit 33, thus authenticating the authentication information.

The authority-processing module, if the request given from the authenticated administrator terminal 4 is correspondent with the authority information, i.e., if the server unit 2 within the authority is requested for the management data within the authority, permits notification corresponding to the request but, if not correspondent, does not permit the notification. This authority management is not limited to a configuration that the authority management is conducted only by the authority-processing module of MMB (management device) 3, and may take a configuration that the notification of the authority is given together with the process notification, and the server unit 2 generates the management data within the authority associated with the identifying information thereof and sends back the management data. In the example, the authority-processing module on the side of the MMB 3 judges which server the request is given to and whether this request should be permitted or not in accordance with the authority information, and a data generation module on the side of the server unit 2 judges which data should be displayed.

Further, the server unit 2 is, as shown in FIG. 2, a general type of computer having a housing 21 that contains an arithmetic processing unit 22 constructed of a CPU (Central Processing Unit), a main memory, etc. , a storage unit (ROM) 23 stored with data and software for arithmetic processing, an I/O port 24, a communication control unit 25, etc.. In particular, the server unit 2 in the embodiment is a Web server for providing HTML (Hyper Text Markup Language) contents to the user terminals 5 via a network such as the Internet, etc.. These server units 2 may be independent computers and may also be configured within a single computer in which an area is segmented by partitions into a plurality of areas, and the plurality of areas are ensured and assigned functions as separate servers.

The communication control unit 25 controls communications with external user computers via the network such as the Internet, etc., and with the MMB 3.

The storage unit 23 is stored with an operating system (OS) and application software. Further, the storage unit 23 is stored with operating status logs, a template for generating a Web page for the management, contents to be provided to the users, and so on.

The arithmetic processing unit 22 reads the OS and the application software from the storage unit 23 and executes the OS and the application software, and effects arithmetic processing upon pieces of information inputted from the I/O port 24 and from the communication control unit 25 and the information read from the storage unit 23, thereby functioning as a request processing module, a data generation module and a processing result transmission module as shown in FIG. 3.

The request processing module executes processes which the MMB 3 notifies of, such as acquiring hardware information, acquiring the operating status logs, changing the setting, applying a patch (a differential file) and so forth. Note that the request processing module, if the setting is changed such as a change in name of a file for recording the logs, a change in path, etc., records these changes and executes the processes based on a post-change configuration.

The data generation module generates the management data in a predetermined format, i.e., in this example, an HTML-formatted management page on the basis of a processing result.

The processing result transmission module transmits the management data in the predetermined format to the management device 3.

Further, the administrator terminal 4 is a general type of computer having a function of receiving and displaying (browsing) a request for the Web page for the management (which is also referred to as a management page) and also this management page through the Web browser.

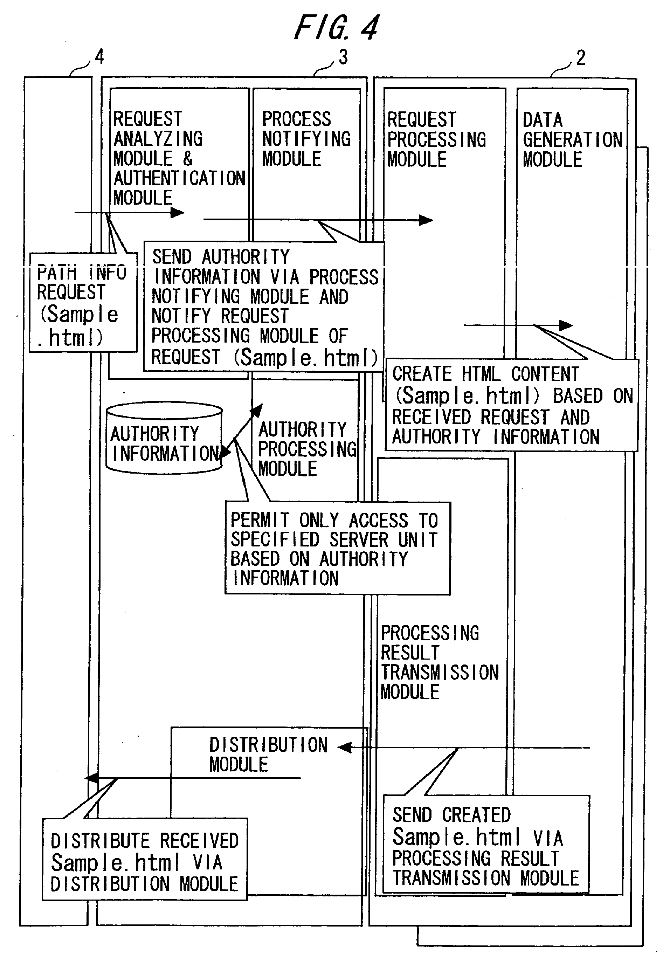

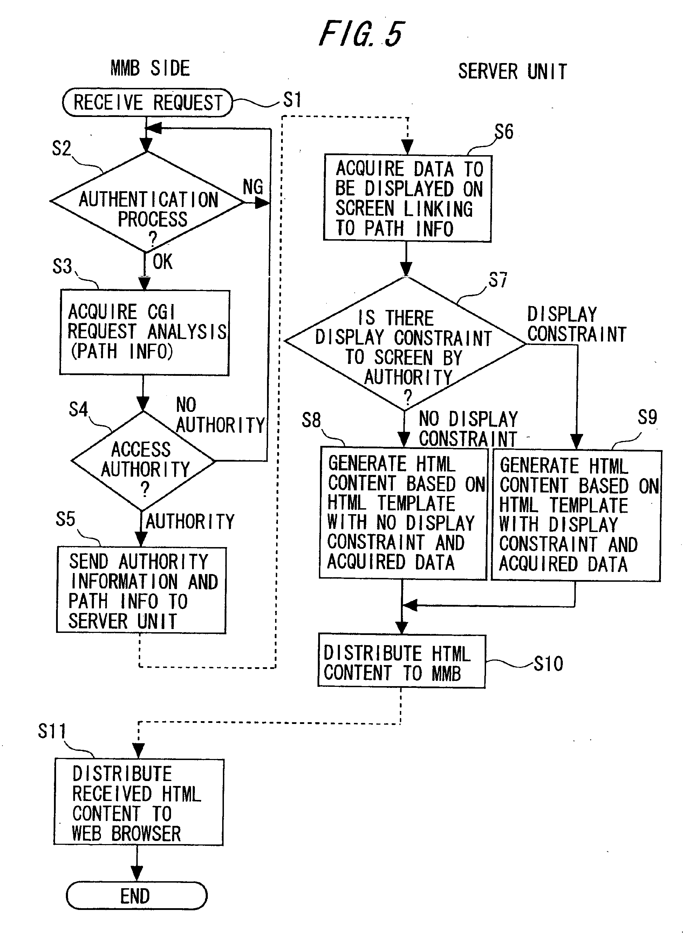

Next, a management method executed by the system 1 having the architecture will be explained with reference to FIGS. 4 - 7.

When the administrator gives an instruction to manage the server units 2 by operating the Web browser on the administrator terminal 4, the administrator terminal 4 sends the management request and the authentication information to the MMB 3. The MMB 3, when receiving the management request and the authentication information from the administrator terminal 4 (step 1, which will hereinafter be abbreviated such as S1), makes the authentication based on the authentication information received by the authentication module (S2).

If authenticated in step 2, the MMB 3 analyzes the request and seeks which server unit 2 the request is given to and which process is requested (S3).

Then, the authority-processing module of the MMB 3 refers to the authority information and thus judges whether or not the administrator has the authority of executing the analyzed process (S4) .

When judging that the administrator has the authority, i.e., when judging that the process is suited to the authority information, the process notifying module notifies the server unit 2 of the process and the authority information as well (S5).

For example, if the request is to browse the system logs, a specified server unit 2 is notified of a process of acquiring a page describing the system logs. To be specific, the CGI is started up such as <a href"=/cgi-bin/xxxxx.cgi/sample.html">PATH INFO </a>, and a corresponding item of information is acquired from the server unit 2 specified by a socket. In the example, "sample. html" can be acquired as "PATH INFO".

Herein, the specified server unit 2 represents the server unit 2 specified by the request given from the administrator terminal 4 and may be any one of the server units 2 and may also be a plurality of server units.

In the server unit 2 notified of the process, the request processing module executes the notified process, e. g. , collection of the management data (S6). In the example, the management data is the system log.

The server unit 2 judges whether or not there is a display restriction by referring to the authority information (S7).

If there is no display restriction, the server unit 2 reads an HTML template with no display restriction and adds the acquired data, thus generating an HTML content (S8).

Whereas if there is the display restriction, the server unit 2 reads a template having this display restriction and adds the acquired data, thus generating an HTML content (S9).

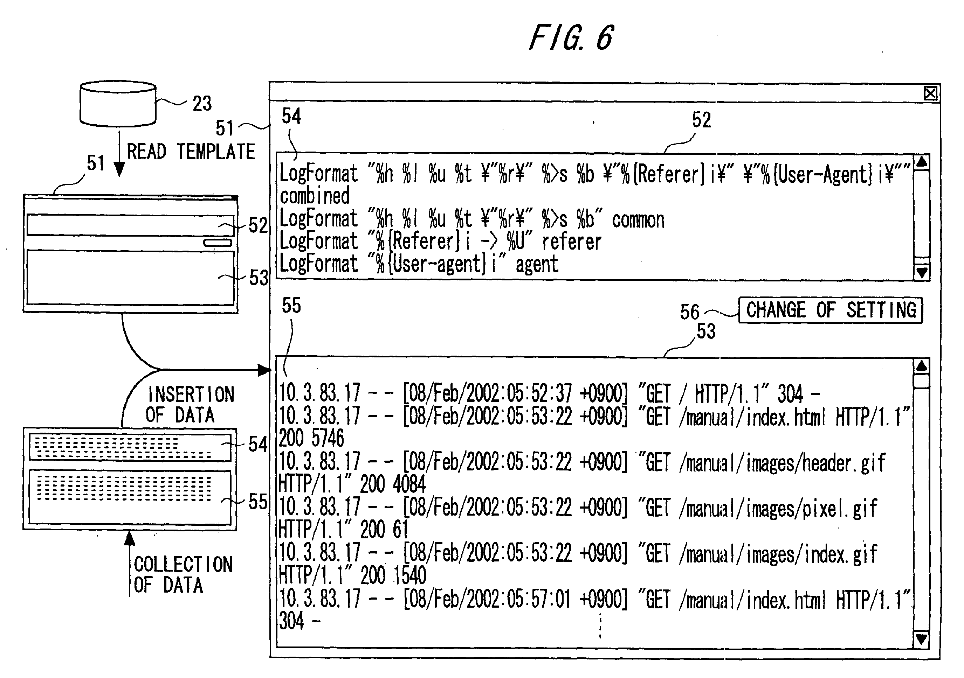

FIG. 6 is an explanatory diagram in the case of generating an HTML content 56 by reading a template 51 with no display restriction and adding format data 54 and log data 55 as pieces of management data into a format setting box 52 and a log display box 53.

On the other hand, if there is the display restriction of the format data, the template describing nothing in the format setting box 52 in FIG. 6 is read out, and only the log data 55 is added. Further, in the case of the administrator having no authority to change the setting, the format data 54 is added into the format setting box 52 and is thus displayed, however, editing may be set disabled, and a button 56 indicating a change of setting and so on may be set non-displayed.

Then, the server unit 2 transmits the generated HTML content to the MMB 3 (S10).

The MMB 3 receiving the HTML content from the server unit 2 distributes the HTML content to the requester administrator terminal 4 (S11) .

Thus, in the server system 1 in the embodiment, with the Web browser serving as a front end, the administrator can administer the servers, wherein the terminals are not limited as by the conventional SMC. Note that the types of the processes to be requestedmaybe, without being limited to browsing, the change of setting (i.e., transmission of the data to be changed), a stop/startup/switchover of the server unit, uploading of the file, and so forth.

Moreover, in the embodiment, each of the server units 2 is configured to generate the HTML content as the management data, thereby simplifying the configuration of the MMB 3. The function of generating the HTML content is, if supposed to be the Web server, a function generally included for the server to provide the HTML content to the user terminal via the Internet, and can be used in common with the generation of the management data, whereby the server system can be simplified on the whole.

Moreover, the request processing module generating the HTML content is disposed on the side of the server unit, and hence, if the configuration of the server unit is changed, there is no necessity of adding any change to the MMB when the process of the request processing module and the HTML template are changed corresponding to the change in configuration, whereby the configuration of the MMB can be simplified as by setting the ROM as the storage device of the MMB, etc..

### <Others>

The invention is not limited to only the illustrated examples given above and can be, as a matter of course, changed in a variety of forms in the range that does not deviate from the gist of the invention as defined by the appended claims.

For example, the same effects as those in the embodiment discussed above can be acquired also from the configurations given in the description. Further, the components thereof can be combined to the greatest possible degree.

## Claims

1. An information processing system configured by a plurality of information processing devices and a management device for the information processing devices,
the management device comprising:
a request receiving module receiving a request from an administrator terminal via a network;
a process notifying module notifying the information processing device of a process responding to the request; and
a distribution module acquiring management data as a result of the process from the information processing device and transmitting the management data to the requester administrator terminal,
the information processing device comprising:
a request processing module executing a process which is notified by the management device;
a data generation module generating the management data in a predetermined format on the basis of the result of the process; and
a processing result transmission module transmitting the management data in the predetermined format to the management device.

2. An information processing system according to Claim 1, wherein the request processing module of the information processing device executes the process which is notified by the management device, corresponding to a configuration of the information processing device.

3. An information processing system according to Claim 1, wherein the process notifying module of the management device notifies the information processing device of the process through a distribution function implemented CGI (Common Gateway Interface) started up in response to a request from the administrator terminal.

4. An information processing system according to Claim 1, wherein the management device comprises an authentication module making authentication based on identifying information inputted from the administrator terminal, and
when authenticated by the authentication module, the process notifying module notifies the information processing device of the request given from the administrator terminal.

5. An information processing system according to Claim 4, wherein the process notifying module notifies the information processing device of the identifying information of the requester together with the process, and
the data generation module of the information processing device acquires authority associated with the identifying information, and generates the management data corresponding to the authority.

6. An information processing device management method conducted by a plurality of information processing devices and by a management device for the information processing devices,
the management device executing steps of:
receiving a request from an administrator terminal via a network;
notifying the information processing device of a process responding to the request; and
acquiring management data as a result of the process from the information processing device and transmitting the management data to the requester administrator terminal,
the information processing device executing steps of:
executing a process which is notified by the management device;
generating the management data in a predetermined format on the basis of the result of the process; and
transmitting the management data in the predetermined format to the management device.

7. A management method according to Claim 6, wherein in the step that the information processing device executes the process which is notified by the management, the process is executed corresponding to a configuration of the information processing device.

8. A management method according to Claim 6, wherein in the step that the management device notifies of the process, the information processing device is notified of the process through a distribution function implemented CGI (Common Gateway Interface) started up in response to a request from the administrator terminal.

9. A management method according to Claim 6, wherein the management device further executes a step of making authentication based on administrator identifying information inputted from the administrator terminal, and
the information processing device is notified of the request given from the authenticated administrator terminal.

10. A management method according to Claim 9, wherein the management device notifies the information processing device of the identifying information of the requester together with the process, and
the information processing device acquires authority associated with the identifying information, and generates the management data corresponding to the authority.

11. A management device providing an administrator terminal with management data of a plurality of information processing devices, comprising:
a request receiving module receiving a request from an administrator terminal via a network;
a process notifying module notifying the information processing device of a process responding to the request; and
a distribution module acquiring management data as a result of the process from the information processing device and transmitting the management data to the requester administrator terminal.

12. A management device according to Claim 11, wherein the process notifying module notifies the information processing device of the process through a distribution function implemented CGI (Common Gateway Interface) started up in response to a request from the administrator terminal.

13. A management device according to Claim 11, further comprising an authentication module making authentication based on administrator identifying information inputted from the administrator terminal, and
the process notifying module notifies the information processing device of the request given from the administrator terminal authenticated by the authentication module.
